# EUROPÄISCHE PATENTSCHRIFT

(11) **EP 2 110 614 B1**
(45) Veröffentlichungstag und Bekanntmachung des Hinweises auf die Patenterteilung: **01.10.2014**
(21) Anmeldenummer: 08007471.9
(22) Anmeldetag: 16.04.2008
(51) Int. Cl.: F24F 1/02

(54) **Klimagerät mit Sicherheitseinrichtung zur Vermeidung des Austritts von Kältemittel in den Innenbereich**
Air conditioning device with safety device avoiding refrigerant leak into inside of room
Climatiseur doté d'un dispositif de sécurité pour éviter l'entrée de réfrigérant à l'intérieur de l'espace

(43) Veröffentlichungstag der Anmeldung: 21.10.2009
(73) Patentinhaber: Truma Gerätetechnik GmbH & Co. KG, 85640 Putzbrunn (DE)
(72) Erfinder: Plank, Johann, 83125 Eggstätt (DE); Venschott, Mathias, 81827 München (DE)
(74) Vertreter: Sties, Jochen

(56) Entgegenhaltungen:
- EP-A- 1 500 532
- JP-A- 2007 127 388

## Beschreibung

Die Erfindung betrifft gemäß dem Oberbegriff von Anspruch 1 ein Klimagerät zum Klimatisieren eines Raumes.

Ein derartiges Klimagerät eignet sich insbesondere zum Kühlen von Innenräumen von Caravans, Booten oder anderen, insbesondere mobilen Kleinräumen. Mit einem derartigen Klimagerät ist aber auch das Beheizen eines Raumes möglich, wenn das Klimagerät als Wärmepumpe betrieben wird.

Das der Luftkühlung zugrunde liegende Prinzip der Kälteerzeugung mittels eines Kältemittelkreislaufs ist seit langem bekannt und z.B. in der DE 201 11 475 U1 beschrieben. Dabei verdichtet ein Kompressor ein gasförmiges Kältemittel und transportiert es über eine Kältemittelleitung zu einem Verflüssiger (Kondensator). Der als Wärmetauscher dienende Verflüssiger wird durch Umgebungsluft gekühlt, die mittels eines Verflüssiger-Gebläses über einen Umgebungslufteinlass angesaugt und über einen Umgebungsluftauslass ausgeblasen wird. Dadurch verflüssigt sich das zunächst gasförmige und unter einem hohen Druck stehende Kältemittel. Das flüssige und immer noch unter hohem Druck stehende Kältemittel wird über eine Kältemittelleitung zu einer Expansionseinrichtung, z.B. einer Drossel geführt, wo sich das Kältemittel entspannen kann.

Durch die Entspannung geht das Kältemittel in die dampfförmige Phase über. Im Verdampfer findet dann durch Wärmeaufnahme des Kältemittels aus der zu kühlenden Raumluft der Phasenwechsel von dampfförmig zu gasförmig statt. Die Raumluft wird mittels eines Verdampfer-Gebläses durch einen Raumlufteinlass oder als Frischluft von Außen angesaugt, über den Verdampfer geführt und über einen oder mehrere Raumluftauslässe wieder zurück in den zu kühlenden Raum als Kaltluft geblasen wird.

Das gasförmige Kältemittel wird über eine Kältemittelleitung zurück zum Kompressor geführt. Dort wird das jetzt wieder gasförmige Kältemittel erneut komprimiert und der Kältemittelkreislauf in der oben beschriebenen Weise fortgeführt.

Die Komponenten eines derartigen Klimageräts werden üblicherweise in einem Gehäusekasten untergebracht, wie er ebenfalls in der DE 201 11 475 U1 gezeigt ist.

Weiterhin ist es aus der DE 10 2004 032 920 A1 bekannt, dass der überwiegende Teil der Bauelemente des Kältemittelkreislaufs von einer gemeinsamen Halterung in ihrer Funktionsstellung gehalten wird. Die Halterung kann aus einem geschäumten Kunststoffmaterial, z.B. expandiertem Polypropylen (EPP) bestehen.

Als Kältemittel haben sich Substanzen bewährt, die einen besonders guten Wärmetransport ermöglichen und einen zuverlässigen Phasenwechsel zwischen gasförmiger und flüssiger Phase gewährleisten. Einige dieser Kältemittel, insbesondere natürliche Kältemittel sind jedoch brennbar oder toxisch, so dass sichergestellt werden muss, dass das Kältemittel nicht aus dem Kältemittelkreislauf entweichen kann.

Der Kältemittelkreislauf wird jedoch häufig durch gelötete Kupferleitungen gebildet. weil Kupfer eine ausreichende Korrosionsfestigkeit besitzt und einen guten Wärmeübergang zwischen dem Kältemittel und der von außen strömenden Luft ermöglicht. Insbesondere werden die Wärmetauscher (Verflüssiger, Verdampfer) zu einem erheblichen Teil aus verlöteten Metall- bzw. Kupferleitungen gebildet.

Trotz aller Sorgfalt bei der Herstellung besteht ein nicht auszuschließendes Restrisiko, dass einzelne Lötverbindungen undicht sind oder im Laufe des oft starken Vibrationen ausgesetzten Betriebs undicht werden. Durch diese Undichtigkeiten kann Kältemittel entweichen, was insbesondere dann problematisch ist, wenn das Kältemittel brennbar oder toxisch ist.

Aus der JP 2007 127388 A ist ein Klimagerät bekannt, das ein Gehäuse mit einem darin untergebrachten Kältemittelkreislauf aufweist. Das Gehäuse weist einen Innenbereich, in dem die Raumluft geführt wird, und einen Außenbereich, in dem die Umgebungsluft geführt wird auf. Die zwischen den Leitungselementen und anderen Bauelementen des Kältemittelkreislaufs vorhandenen Fügestellen sind nicht in dem Innenbereich, sondern in einem zwischen dem Innenbereich und dem Außenbereich vorgesehenen Zwischenbereich angeordnet.

Der Erfindung liegt die Aufgabe zugrunde, ein Klimagerät anzugeben, bei dem auch im Falle einer Undichtigkeit im Kältemittelkreislauf und einem damit verbundenen Entweichen von Kältemittel keine Gefahr für die Umgebung und insbesondere für den Menschen besteht.

Die Aufgabe wird durch ein Klimagerät mit den Merkmalen von Anspruch 1 gelöst. Weiterentwicklungen sind in den abhängigen Ansprüchen angegeben.

Es wird ein Klimagerät zum Klimatisieren eines Raumes angegeben, mit einem Gehäuse, in dem ein Kältemittelkreislauf untergebracht ist, wobei der Kältemittelkreislauf als Bauelemente aufweist: einen Kompressor zum Verdichten eines Kältemittels, einen Verflüssiger mit einem zugeordneten Verflüssiger-Gebläse zum Zu- und Abführen von Umgebungsluft, eine Expansionseinrichtung zum Expandieren des Kältemittels, einen Verdampfer mit einem zugeordneten Verdampfer-Gebläse zum Zuführen von Frischluft und/oder Raumluft des zu klimatisierenden Raumes, Führen der jeweiligen Luft über den Verdampfer sowie Abführen der Luft in den zu klimatisierenden Raum, und Leitungselemente zum Führen des Kältemittels innerhalb der jeweiligen Bauelemente oder zwischen verschiedenen Bauelementen. Die Leitungselemente sind z.B. Rohrelemente, die innerhalb der Wärmetauscher (Verflüssiger, Verdampfer) eingebaut sind oder die diversen Bauelemente miteinander verbinden. Das Kältemittel wird meist ausschließlich durch die Leitungselemente geführt, um einen geschlossenen Kreislauf zu bilden.

Das Gehäuse weist einen Innenbereich, in dem die Raumluft geführt wird, und einen Außenbereich, in dem die Umgebungsluft geführt wird, auf. Der Innenbereich und der Außenbereich sind durch eine Dichtungseinrichtung gegeneinander abgedichtet. Dabei sind die Bauelemente des Kältemittelkreislaufs derart angeordnet, dass alle zwischen den Leitungselementen oder zwischen den Leitungselementen und den anderen Bauelementen des Kältemittelkreislaufs vorhandenen Fügestellen nicht in dem Innenbereich angeordnet sind.

Wie oben beschrieben, besteht das nicht auszuschließende Risiko, dass an den Fügestellen, z.B. an den Verbindungsstellen zwischen verschiedenen Leitungselementen, Undichtigkeiten auftreten, über die Kältemittel austreten kann. Da sich dieses Risiko auch bei sorgfältigster Fertigung und Behandlung des Klimageräts nicht vollständig ausschließen lässt, wird vorgesehen, dass die Fügestellen jedenfalls nicht in dem Innenbereich angeordnet sein dürfen, in dem die Raumluft geführt wird. Auf diese Weise kann verhindert werden, dass die Raumluft, der schließlich auch die Insassen des zu kühlenden Raums ausgesetzt sind, mit austretendem Kältemittel kontaminiert wird. Dadurch können die Menschen wirksam vor dem Kältemittel geschützt werden. Dabei ist es unerheblich, ob das Kältemittel brennbar, toxisch oder in anderer Weise schädigend sein kann.

Kältemittel, das an einer undichten Fügestelle austritt, kann ausschließlich in den von dem zu kühlenden Raum getrennten Außenbereich gelangen.

Das Klimagerät kann zum Kühlen des Raums genutzt werden. Es ist aber auch zum Beheizen des Raums geeignet, wenn es als Wärmepumpe betrieben wird. Wenn im Rahmen dieser Anmeldung von "Kühlen", "Kältemittelkreislauf" oder "Kältemittel" etc. gesprochen wird, soll damit auch immer die Variante eines Wärmepumpen- bzw. Heizbetriebs mit umfasst sein, bei der das Klimagerät den "Kältemittelkreislauf" zum Beheizen des Raums einsetzt. Der "Verdampfer" arbeitet dann als Verflüssiger, während der "Verflüssiger" als Verdampfer eingesetzt wird.

Außer der Raumluft kann auch Frischluft aus der Umgebung angesaugt, temperiert und in den zu klimatisierenden Raum eingeblasen werden. Ebenso ist eine Mischung aus Frischluft und Umluft möglicht. Denkbar ist auch ein Kombinationsbetrieb als Heiz-Klimagerät.

Als Innenbereich wird dabei der Bereich des Klimageräts verstanden, der mit dem zu kühlenden Raum in Verbindung steht. Im Gegensatz dazu ist der Außenbereich der Teil des Klimageräts, der mit der Umgebung in Verbindung steht und damit im Wesentlichen die Funktion erfüllt, die Wärme an die Umgebung abzuführen.

Um zu verhindern, dass die Fügestellen im Innenbereich angeordnet sind, ist es besonders zweckmäßig, die Fügestellen in dem Außenbereich anzuordnen. Da der Außenbereich mit der Umgebung in Verbindung steht, kann Kältemittel, das an einer Fügestelle ausgetreten ist, unmittelbar an die Umgebung abgegeben werden. Bei der Umgebung handelt es sich üblicherweise um die Umgebung des zu kühlenden Raumes, also bei einem zu kühlenden Caravan um die Umgebung des Caravans. Hier kann sich das Kältemittel schnell verflüchtigen bzw. wird durch die Durchmischung mit der Umgebungsluft eine Kältemittelkonzentration erreicht, die für Mensch und Umgebung ungefährlich ist.

Die Dichtungseinrichtung kann eine Schottwand zwischen dem Innenbereich und dem Außenbereich aufweisen. Die Schottwand gewährt eine sichere Abdichtung und damit Trennung der beiden Bereiche, so dass jedenfalls kein Kältemittel vom Außenbereich in den Innenbereich gelangen kann.

Zwischen dem Innenbereich und dem Außenbereich, also z.B. auch in der Dichtungseinrichtung bzw. der Schottwand kann ein Rückschlagventil vorgesehen sein, welches eine Fluidströmung von dem Innenbereich in den Außenbereich, jedoch nicht umgekehrt von dem Außenbereich in den Innenbereich zulässt. Je nach Druckverhältnissen zwischen Innenbereich und Außenbereich besteht somit zwar die Möglichkeit, dass Fluid, z.B. Luft, in geringem Maße aus dem Innenbereich in den Außenbereich strömt. Auf jeden Fall wird sichergestellt, dass keine Luft umgekehrt aus dem Außenbereich in den Innenbereich gelangen kann.

Das Rückschlagventil kann z.B. durch eine einseitig öffenbare Klappe gebildet werden, die lediglich eine einseitige Durchströmung vom Innenbereich in den Außenbereich zulässt.

Wenigstens ein Teil der Fügestellen kann durch Lötverbindungen gebildet sein. Ebenso ist es aber auch möglich, dass die Fügestellen durch Kleben, Schweißen, als Schneidring-Verbindungen, Pressverbindungen oder Quetschverbindungen etc. gebildet sind.

Im Betrieb des Klimageräts kann durch das Verflüsser-Gebläse in dem Außenbereich ein niedrigerer atmosphärischer Druck erzeugt werden als in dem Innenbereich. Dadurch entsteht zwischen Innenbereich und Außenbereich ein Druckgefälle, welches wiederum - sofern das oben beschriebene Rückschlagventil vorgesehen ist - die Luftströmung vom Innenbereich in den Außenbereich bewirkt. Die Luftströmung fördert dann Kältemittel, welches unerwünschterweise an einer Fügestelle ausgetreten ist, zu dem Verflüssiger-Gebläse und von dort zusammen mit der Luft, die von dem Verflüssiger-Gebläse durch den Verflüssiger gefördert wurde, in die Umgebung. In jedem Fall stellen die Druckverhältnisse sicher, dass kein Kältemittel in den unter einem höheren Druck stehenden Innenbereich gelangen kann.

In dem Außenbereich können abgeschrägte Führungsflächen vorgesehen sein, die bei bestimmungsgemäßer Einbaulage des Klimageräts derart zu einer im unteren Bereich des Außenbereichs vorgesehenen Bodenöffnung geneigt sind, dass Fluide, die schwerer als Luft sind, insbesondere das Kältemittel, über die Führungsflächen zu der Bodenöffnung führbar und von dort in die Umgebung auslassbar sind. Das bedeutet, dass auch dann, wenn das Klimagerät nicht in Betrieb ist, Kältemittel, welches unkontrolliert an einer Fügestelle austritt, allein aufgrund seines gegenüber Luft höheren spezifischen Gewichts und der Schwerkraftwirkung über die abgeschrägten Führungsflächen abfließt und zu der Bodenöffnung geführt wird. Dort kann das Kältemittel austreten.

Die Führungsflächen können in dem Gehäuse, z.B. in einer aus einem geschäumten Kunststoffmaterial wie z.B. EPP bestehenden Gehäuseunterschale ausgebildet sein.

Beim Einbau des Klimageräts z.B. in einem Caravan besteht die Möglichkeit, dass die Bodenöffnung des Klimageräts mit einer Bodenöffnung im Fahrzeugboden gekoppelt ist. Das Kältemittel tritt dann, ohne dass es einer Förderwirkung durch ein Gebläse o.ä. bedarft, an der Unterseite des Fahrzeugs aus.

Der Verdampfer kann ein Innenraum-Wärmetauscher sein, der im Wesentlichen in dem Innenbereich angeordnet ist, um die Raumluft zu kühlen. Der Verdampfer kann mehrere Leitungselemente aufweisen, die an Fügstellen miteinander verbunden sind. Die Fügestellen des Verdampfers sind dann in dem Außenbereich anzuordnen.

So ist es z.B. bekannt, den Verdampfer aus mehreren entsprechend gebogenen Kupferrohren durch Zusammenlöten mit einer Gegenhalteplatte zu bauen. Sämtliche Fügestellen sollten dann auf einer Seite des Verdampfers liegen, die dann in dem Außenbereich platziert ist. Jedenfalls sollte keine der Fügestellen im Innenbereich angeordnet sein.

Die dem Verdampfer zugeführte Luft kann Umluft (aus dem zu klimatisierendem Raum) oder/und auch Frischluft sein.

Die Komponenten des Kältemittelkreislaufs, insbesondere die Leitungen, können wenigstens teilweise statt aus Kupfer auch aus Aluminium oder Kunststoff bestehen.

Zudem ist es möglich, dass innerhalb eines Gehäuses auch mehrere Kältemittelkreisläufe vorgesehen sind.

Diese und weitere Vorteile und Merkmale werden nachfolgend anhand von Beispielen unter Zuhilfenahme der begleitenden Figuren näher erläutert. Es zeigen:
- **Fig. 1**: eine schematische Draufsicht mit Teilschnitt auf ein Klimagerät;
- **Fig. 2**: eine Ausschnittsvergrößerung zu Fig. 1;
- **Fig. 3**: eine Teil-Seitenansicht des Klimageräts von Fig. 1;
- **Fig. 4**: eine Teil-Perspektivansicht zu dem Klimagerät von Fig. 1; und
- **Fig. 5**: eine schematische Draufsicht auf ein Klimagerät.

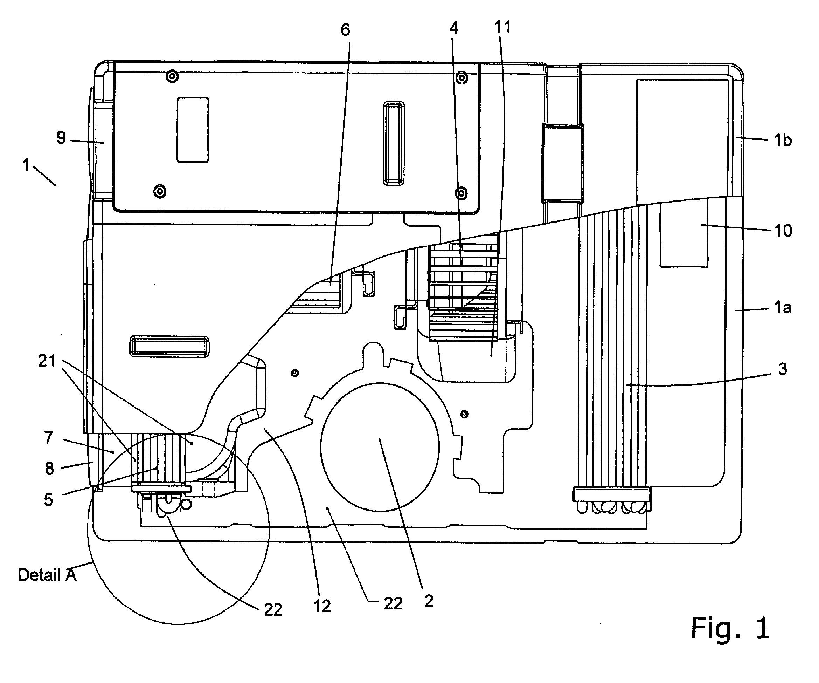

Fig. 1 zeigt in der Draufsicht ein Klimagerät mit einem Gehäuse 1.

Das Klimagerät kann zum Kühlen eines Raumes, aber auch zum Beheizen des Raumes genutzt werden (Wärmepumpenbetrieb).

Das Gehäuse 1 kann - wie z.B. aus der DE 10 2004 032 920 A1 bekannt - aus einer Unterschale 1a und einer in Fig. 1 aufgebrochen dargestellten Oberschale 1b bestehen. Beide Schalenhälften 1a, 1b sind aus einem geschäumten Kunststoffmaterial, vorzugsweise aus expandiertem Polypropylen (EPP), hergestellt. Jedoch kann das Gehäuse 1 auch aus anderen Materialien oder in anderer Konstruktion ausgebildet sein, als in Fig. 1 gezeigt. Das in Fig. 1 dargestellte Gehäuse 1 dient daher lediglich der beispielhaften Darstellung.

In der Unterschale 1a (und umgekehrt auch in der Oberschale 1b, was jedoch in der Fig. 1 nicht zu sehen ist) sind Ausnehmungen zw. Vertiefungen ausgebildet, in die wesentliche Komponenten (Bauelemente) eines Kältemittelkreislaufs eingesteckt sind.

Zu den Komponenten des Kältemittelkreislaufs gehören insbesondere ein zum Verdichten des Kältemittels dienender Kompressor 2, ein als Verflüssiger (Kondensator) 3 dienender Wärmetauscher, ein Verflüssiger-Gebläse 4, ein weiterer, als Verdampfer 5 dienender Wärmetauscher sowie ein Verdampfer-Gebläse 6. Die Bauelemente sind teilweise durch die fragmentarisch gezeigte Oberschale 1b verdeckt.

Zu dem Kältemittelkreislauf gehören weitere Bauelemente, wie z.B. eine Expansionseinrichtung (Drossel) zum Expandieren des Kältemittels, die jedoch in Fig. 1 nicht gezeigt sind.

Vor dem Verdampfer 5 kann ein Filter 7 zur Reinigung der über einen RaumluftEinlass 8 angesaugten Raumluft angeordnet werden.

Die zu kühlende Raumluft wird durch das Verdampfer-Gebläse 6 über den Raumluft-Einlass 8 angesaugt, durch das Filter 7 gefiltert und durch Vorbeiströmen an dem Verdampfer 5 gekühlt. Danach wird die jetzt gekühlte Raumluft über einen Raumluft-Auslass 9 wieder ausgeblasen und kann mit Hilfe von Rohren oder Schläuchen zu der Stelle geleitet werden, wo die gekühlte Raumluft gewünscht wird.

Die am Verdampfer 5 aufgenommene und auf das Kältemittel übertragene Wärme, die dazu führt, dass das Kältemittel verdampft wird, wird bekannterweise zu dem Verflüssiger 3 geführt, wo das inzwischen durch den Kompressor 2 komprimierte Kältemittel abgekühlt wird. Dazu wird Luft aus der Umgebung durch das Verflüssiger-Gebläse 4 über einen Umgebungsluft-Einlass 10 angesaugt, durch den Verflüssiger 3 geführt und schließlich über einen Umgebungsluft-Auslass 11 an die Umgebung abgegeben. Der Umgebungsluft-Einlass 10 und der Umgebungsluft-Auslass 11 sind an der Unterseite der Unterschale 1a angeordnet. So ist es möglich, dass Klimagerät z.B. am Boden eines Fahrzeugs einzubauen und die Wärme nach unten an der Unterseite des Fahrzeugs an die Umgebung abzugeben.

Der Bereich des Gehäuses 1, in dem die zu kühlende Raumluft geführt wird und zu dem die entsprechenden Bauelemente zuzuordnen sind, wird als Innenbereich 21 bezeichnet. Der Bereich des Gehäuses 1 hingegen, der der Führung der Umgebungsluft dient, wird als Außenbereich 22 bezeichnet. Dementsprechend steht der Innenbereich 21 mit dem zu kühlenden Raum in kommunizierender Verbindung, während der Außenbereich 22 mit der Umgebung in Verbindung steht.

Zwischen dem Innenbereich 21 und dem Außenbereich 22 ist eine Dichtungseinrichtung in Form einer Trennwand 12 vorgesehen. Die Dichtungseinrichtung bzw. Trennwand 12 sollte die Bereiche 21, 22 möglichst gut gegeneinander abtrennen, um keine ungewollten Luftströmungen zwischen den Bereichen 21, 22 zu ermöglichen, die die Effizienz des Klimageräts mindern könnten.

Der Verdampfer 5 ist - folgt man der oben angegebenen Definition streng - dem Innenbereich 21 zuzuordnen, da die Raumluft durch den Verdampfer 5 geführt wird. Es ist jedoch vorgesehen, dass zwar ein wesentlicher Teil des Verdampfers 5 in dem Innenbereich 21 angeordnet ist, dass jedoch sämtliche Fügestellen, die zwangsläufig beim Aufbau eines Verdampfers durch die Verbindung von einzelnen Leitungselementen entstehen, im Außenbereich 22 angeordnet sind. Dementsprechend weist der Verdampfer 5 keine Fügestellen auf, die im Innenbereich 21 platziert sind.

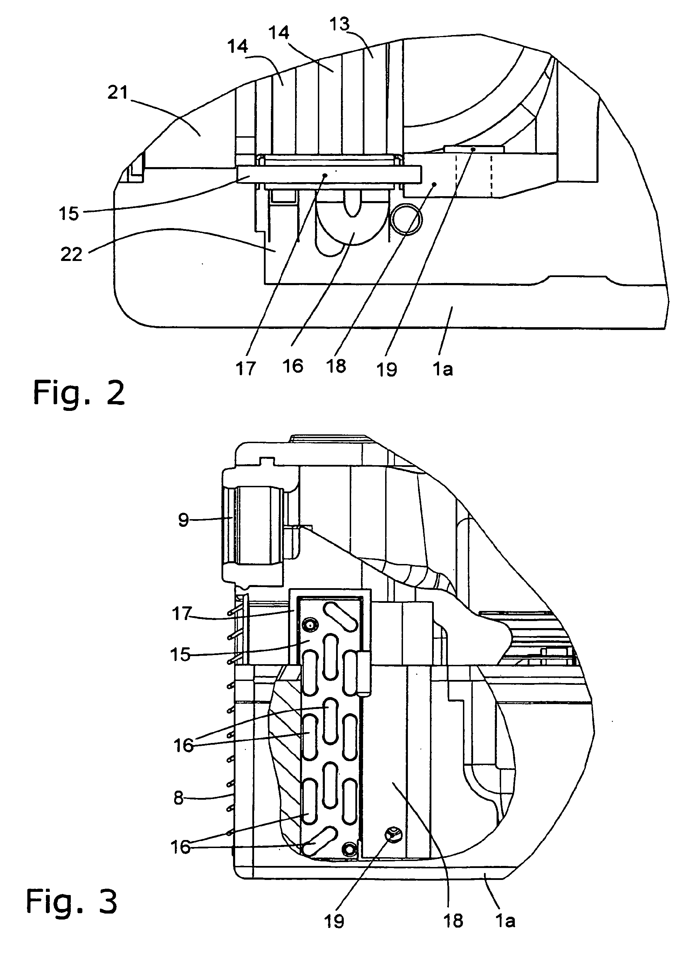

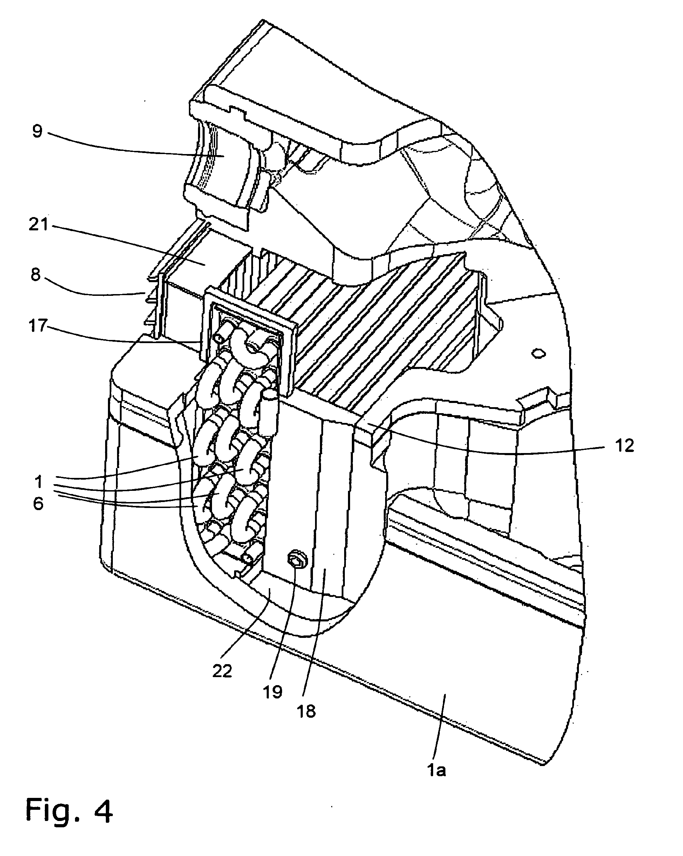

Dies soll anhand der Fig. 2 bis 4 näher erläutert werden, die unterschiedliche Teilansichten des Klimageräts von Fig. 1 betreffen und jeweils einen in Fig. 1 als Detail A bezeichneten Ausschnitt zeigen.

Der Wärmetauscher des Verdampfers 5 ist durch eine in zahlreichen Windungen verlaufende Leitung, vorzugsweise eine Kupferleitung 13 gebildet. Die Kupferleitung 13 wiederum besteht aus einzelnen gebogenen Leitungselementen 14, die auf einer in den Fig. nicht gezeigten Seite U-förmig umgebogen sind. Auf der gegenüberliegenden, in den Figuren gezeigten Seite sind die Leitungselemente 14 mit ihren offenen Enden in eine Gegenhalteplatte 15 eingesteckt und dort mit kurzen U-förmigen Leitungselementen 16 verlötet.

Die Gegenhalteplatte 15 ist von einem Dichtungsprofil 17 umschlossen. Das Dichtungsprofil 17 ist in die Trennwand 12 eingesetzt und somit Bestandteil der Dichtungseinrichtung. Ebenso ist eine Schottwand 18 vorgesehen, die in die Dichtungseinrichtung bzw. Trennwand 12 integriert ist und zusammen mit dem Dichtungsprofil 17 und der Gegenhalteplatte 15 den Innenbereich 21 vom Außenbereich 22 trennt.

Wie insbesondere in Fig. 2 erkennbar, sind sämtliche Füge- bzw. Lötstellen des Verdampfers 5 in dem Außenbereich 22 gelegen. Im Innenbereich 21 lassen sich keine Lötstellen finden. Da der Außenbereich 22 von Umgebungsluft durchströmt wird, wird somit Kältemittel, das durch ein ungewünschtes Leck aus der Kupferleitung 13 austritt, zusammen mit der Umgebungsluft über den Umgebungsluft-Einlass 10 oder den Umgebungsluft-Auslass 11 an die Umgebung abgegeben.

Dadurch, dass das an einer Leckstelle ausgetretene Kältemittel in jedem Fall in die Umgebung abgegeben wird, kann verhindert werden, dass das Kältemittel die Raumluft kontaminiert und damit Menschen, die sich in dem zu kühlenden Raum aufhalten, belastet.

Auch bezüglich der anderen Leitungselemente 14 bzw. der Kupferleitung 13 ist anzustreben, dass möglichst keine Fügestelle bzw. Lötverbindung im Innenbereich 21 angeordnet ist. Gegebenenfalls sind bei der Herstellung ausreichend lange Leitungselemente 14 vorzusehen, um sicherzustellen, dass die Fügestellen vollständig im Außenbereich 22 angeordnet sind.

Die Form der Unterschale 1a, insbesondere die Oberseite der Unterschale 1a kann derart ausgebildet sein, dass Führungsflächen vorgesehen sind, die in Richtung des Umgebungsluft-Einlasses 10 oder des Umgebungsluft-Auslasses 11 abgeschrägt geneigt sind. Insbesondere natürliche Kältemittel weisen ein höheres spezifisches Gewicht auf als Luft und sind somit schwerer als Luft. Allein durch die Wirkung der Schwerkraft kann somit erreicht werden, dass ungewollt austretendes Kältemittel über die abgeschrägten Führungsflächen abgleitet und direkt zu dem Umgebungsluft-Einlass 10 oder dem Umgebungsluft-Auslass 11 geführt und dort an die Umgebung abgegeben wird.

Im Betrieb des Klimageräts bewirkt das Verflüssiger-Gebläse 4, dass der atmosphärische Druck im Außenbereich 22 niedriger ist als im Innenbereich 21.

Zusätzlich kann ein Rückschlagventil 19 vorgesehen sein, das in der Trennwand 12 zwischen Innenbereich 21 und Außenbereich 22 angeordnet ist. Das Rückschlagventil 19 dient als Entlüftungs-Düse, die lediglich eine Luftströmung vom Innenbereich 21 in den Außenbereich 22 zulässt. Die Luftströmung kann gering sein und wird durch den Betrieb des Verflüssiger-Gebläses 4 bewirkt. Mit Hilfe dieser Luftströmung ist es möglich, unerwünscht austretendes Kältemittel aus dem Bereich des Verdampfers 5 zu fördern und über den Umgebungsluft-Einlass 10 oder -Auslass 11 abzugeben. Es wird damit ein zwar geringer, aber dauerhaft bestehender Luftstrom weg vom Innenbereich 21 bewirkt.

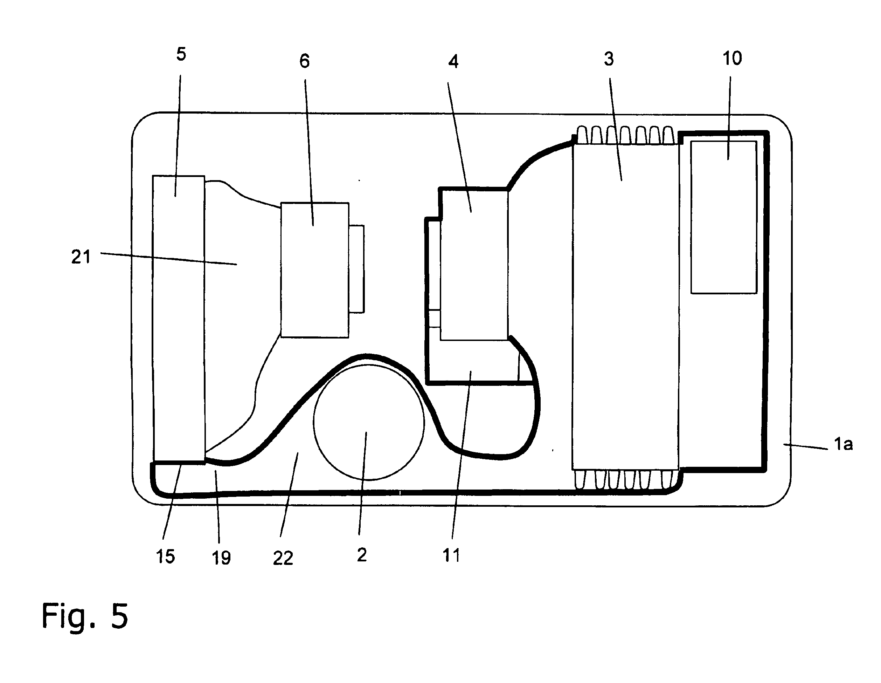

Fig. 5 zeigt in schematischer Draufsicht die Unterschale 1a des Gehäuses 1, mit der Systemgrenze zwischen Innenbereich 21 und Außenbereich 22 (fett eingezeichnete Linie). Dabei ist im Bereich des Verdampfers 5 erkennbar, dass die Lötverbindungen am Verdampfer 5 sämtlich in dem umrandeten Außenbereich 22 angeordnet sind.

Kältemittel, das z.B. im Bereich der Gegenhalteplatte 15 an einer undichten Lötverbindung austritt, kann allein durch die Schwerkraftwirkung zu dem Umgebungsluft-Einlass 10 fließen und dort in die Umgebung austreten.

## Patentansprüche

1. Klimagerät zum Klimatisieren eines Raumes, mit einem Gehäuse (1), in dem wenigstens ein Kältemittelkreislauf untergebracht ist, wobei
- der Kältemittelkreislauf als Bauelemente aufweist:
+ einen Kompressor (2) zum Verdichten eines Kältemittels,
+ einen Verflüssiger (3) mit einem zugeordneten Verflüssiger-Gebläse (4) zum Zu- und Abführen von Umgebungsluft,
+ eine Expansionseinrichtung zum Expandieren des Kältemittels,
+ einen Verdampfer (5) mit einem zugeordneten Verdampfer-Gebläse (6) zum Zuführen von Frischluft und/oder Raumluft des zu klimatisierenden Raumes, Führen der jeweiligen Luft über den Verdampfer sowie Abführen der Luft in den zu klimatisierenden Raum, und
+ Leitungselemente (13, 14, 16) zum Führen des Kältemittels innerhalb der jeweiligen Bauelemente oder zwischen verschiedenen Bauelementen;
- das Gehäuse einen Innenbereich (21), in dem die Raumluft geführt wird, und einen Außenbereich (22), in dem die Umgebungsluft geführt wird, aufweist;
- der Innenbereich (21) und der Außenbereich (22) durch eine Dichtungseinrichtung (12, 15, 17, 18) gegeneinander abgedichtet sind; und wobei
- die Bauelemente des Kältemittelkreislaufs derart angeordnet sind, dass alle zwischen den Leitungselementen oder zwischen den Leitungselementen und den anderen Bauelementen des Kältemittelkreislaufs vorhandenen Fügestellen nicht in dem Innenbereich (21) angeordnet sind;
**dadurch gekennzeichnet, dass**
- im Betrieb durch das Verflüssiger-Gebläse (4) in dem Außenbereich (22) ein niedrigerer atmosphärischer Druck erzeugbar ist als in dem Innenbereich (21).

2. Klimagerät nach Anspruch 1, **dadurch gekennzeichnet, dass**
- der Innenbereich (21) mit dem zu klimatisierenden Raum in Verbindung steht; und dass
- der Außenbereich (22) mit der Umgebung in Verbindung steht.

3. Klimagerät nach Anspruch 1 oder 2, **dadurch gekennzeichnet, dass** die Fügestellen in dem Außenbereich (22) angeordnet sind.

4. Klimagerät nach einem der Ansprüche 1 bis 3, **dadurch gekennzeichnet, dass** die Dichtungseinrichtung eine Schottwand (12, 18) zwischen dem Innenbereich (21) und dem Außenbereich (22) aufweist.

5. Klimagerät nach einem der Ansprüche 1 bis 4, **dadurch gekennzeichnet, dass** zwischen dem Innenbereich (21) und dem Außenbereich (22) ein Rückschlagventil (19) vorgesehen ist, welches eine Fluidströmung von dem Innenbereich (21) in den Außenbereich (22), jedoch nicht umgekehrt von dem Außenbereich (22) in den Innenbereich (21) zulässt.

6. Klimagerät nach einem der Ansprüche 1 bis 5, **dadurch gekennzeichnet, dass** wenigstens ein Teil der Fügestellen durch Lötverbindungen gebildet ist.

7. Klimagerät nach einem der Ansprüche 1 bis 6, **dadurch gekennzeichnet, dass** in dem Außenbereich (22) abgeschrägte Führungsflächen vorgesehen sind, die bei bestimmungsgemäßer Einbaulage des Klimageräts derart zu einer im unteren Bereich des Außenbereichs (22) vorgesehenen Bodenöffnung (10, 11) geneigt sind, dass Fluide, die schwerer als Luft sind, insbesondere Kältemittel, über die Führungsflächen zu der Bodenöffnung (10, 11) führbar und von dort in die Umgebung auslassbar sind.

8. Klimagerät nach einem der Ansprüche 1 bis 7, **dadurch gekennzeichnet, dass**
- der Verdampfer (5) ein Innenraum-Wärmetauscher ist, der im Wesentlichen in dem Innenbereich (21) angeordnet ist;
- der Verdampfer (5) mehrere Leitungselemente (14, 16) aufweist, die an Fügestellen miteinander verbunden sind; und dass
- dass die Fügestellen des Verdampfers (5) in dem Außenbereich (22) angeordnet sind.

9. Klimagerät nach einem der Ansprüche 1 bis 8, **dadurch gekennzeichnet, dass** wenigstens ein Teil der Leitungselemente (14, 16) des Verdampfers mit einer Gegenhalteplatte (15) verbunden sind, die in dem Außenbereich (22) angeordnet ist.

10. Klimagerät nach einem der Ansprüche 1 bis 9, **dadurch gekennzeichnet, dass** der Teil des Verdampfers (5), der in dem Innenbereich (21) angeordnet ist, keine Fügestellen aufweist.

## Claims

1. An air-conditioning device for air-conditioning a room, comprising a housing (1) in which at least one refrigerant circuit is accommodated,
- the refrigerant circuit including as components:
+ a compressor (2) for compressing a refrigerant,
+ a condenser (3) having an associated condenser fan (4) for supplying and discharging ambient air,
+ an expansion means for expanding the refrigerant,
+ an evaporator (5) having an associated evaporator fan (6) for supplying fresh air and/or room air of the room to be air-conditioned, guiding the respective air via the evaporator, and discharging the air into the room to be air-conditioned, and
+ pipe elements (13, 14, 16) for guiding the refrigerant within the respective components or between different components;
- the housing having an inner region (21), in which the room air is guided, and an outer region (22), in which the ambient air is guided;
- the inner region (21) and the outer region (22) being sealed from each other by a sealing means (12, 15, 17, 18); and
- the components of the refrigerant circuit being arranged such that all joining points existing between the pipe elements or between the pipe elements and the other components of the refrigerant circuit are not arranged in the inner region (21);
**characterized in that**
in operation, an atmospheric pressure can be generated by the condenser fan (4) in the outer region (22) which is lower than that in the inner region (21).

2. The air-conditioning device according to claim 1, **characterized in that**
- the inner region (21) is in communication with the room to be air-conditioned; and **in that**
- the outer region (22) is in communication with the environment.

3. The air-conditioning device according to claim 1 or 2, **characterized in that** the joining points are arranged in the outer region (22).

4. The air-conditioning device according to any of claims 1 to 3, **characterized in that** the sealing means includes a bulkhead wall (12, 18) between the inner region (21) and the outer region (22).

5. The air-conditioning device according to any of claims 1 to 4, **characterized in that** provided between the inner region (21) and the outer region (22) is a check valve (19) which allows a fluid flow from the inner region (21) into the outer region (22), but not the other way from the outer region (22) into the inner region (21).

6. The air-conditioning device according to any of claims 1 to 5, **characterized in that** at least part of the joining points are formed by soldered connections.

7. The air-conditioning device according to any of claims 1 to 6, **characterized in that** beveled guide surfaces are provided in the outer region (22) which, when the air-conditioning device is in its installation position as per its intended use, are inclined towards a bottom opening (10, 11) provided in the lower region of the outer region (22) in such a way that fluids which are heavier than air, in particular refrigerants, can be guided via the guide surfaces to the bottom opening (10, 11) and can be let out from there into the environment.

8. The air-conditioning device according to any of claims 1 to 7, **characterized in that**
- the evaporator (5) is an interior heat exchanger which is arranged substantially in the inner region (21);
- the evaporator (5) includes a plurality of pipe elements (14, 16) which are connected with each other at joining points; and **in that**
- the joining points of the evaporator (5) are arranged in the outer region (22).

9. The air-conditioning device according to any of claims 1 to 8, **characterized in that** at least part of the pipe elements (14, 16) of the evaporator are connected with a counter-support plate (15) which is arranged in the outer region (22).

10. The air-conditioning device according to any of claims 1 to 9, **characterized in that** that portion of the evaporator (5) which is arranged in the inner region (12) has no joining points.

## Revendications

1. Appareil de climatisation pour la climatisation d'un espace, comportant un boîtier (1) dans lequel au moins un circuit d'agent frigorigène est logé,
- le circuit d'agent frigorigène présentant en tant que composants :
+ un compresseur (2) pour la compression d'un agent frigorigène,
+ un condenseur (3) présentant une soufflante de condenseur (4) associée pour l'amenée et l'évacuation d'air de l'environnement,
+ un moyen d'expansion pour l'expansion de l'agent frigorigène,
+ un évaporateur (5) présentant une soufflante d'évaporateur (6) associée pour l'amenée d'air frais et/ou d'air ambiant de l'espace à climatiser, pour le guidage de l'air respectif par l'évaporateur, et pour l'évacuation de l'air dans l'espace à climatiser, et
+ des éléments de conduite (13, 14, 16) pour le guidage de l'agent frigorigène à l'intérieur des composants respectifs ou entre différents composants ;
- le boîtier présentant une zone intérieure (21) dans laquelle l'air ambiant est guidé, et une zone extérieure (22) dans laquelle l'air de l'environnement est guidé ;
- la zone intérieure (21) et la zone extérieure (22) étant étanchées l'une par rapport à l'autre par un moyen d'étanchéité (12, 15, 17, 18), et
- les composants du circuit d'agent frigorigène étant agencés de telle sorte que l'ensemble des points d'assemblage présents entre les éléments de conduite ou entre les éléments de conduite et les autres composants du circuit d'agent frigorigène ne sont pas agencés dans la zone intérieure (21) ;
**caractérisé en ce que**
- lors du fonctionnement, une pression atmosphérique qui est inférieure à celle dans la zone intérieure (21) peut être produite dans la zone extérieure (22) au moyen de la soufflante de condenseur (4).

2. Appareil de climatisation selon la revendication 1, **caractérisé en ce que**
- la zone intérieure (21) est reliée à l'espace à climatiser ; et **en ce que**
- la zone extérieure (22) est reliée à l'environnement.

3. Appareil de climatisation selon la revendication 1 ou 2, **caractérisé en ce que** les points d'assemblage sont agencés dans la zone extérieure (22).

4. Appareil de climatisation selon l'une des revendications 1 à 3, **caractérisé en ce que** le moyen d'étanchéité présente une cloison étanche (12, 18) entre la zone intérieure (21) et la zone extérieure (22).

5. Appareil de climatisation selon l'une des revendications 1 à 4, **caractérisé en ce qu'**il est prévu une soupape de retenue (19) entre la zone intérieure (21) et la zone extérieure (22), laquelle permet un flux de fluide de la zone intérieure (21) vers la zone extérieure (22), mais pas inversement de la zone extérieure (22) vers la zone intérieure (21).

6. Appareil de climatisation selon l'une des revendications 1 à 5, **caractérisé en ce qu'**au moins une partie des points d'assemblage est formée par des liaisons soudées.

7. Appareil de climatisation selon l'une des revendications 1 à 6, **caractérisé en ce qu'**il est prévu des surfaces de guidage chanfreinées dans la zone extérieure (22) qui sont inclinées vers un orifice de fond (10, 11) prévu dans zone inférieure de la zone extérieure (22) dans une position de montage conformément à l'usage prévu de l'appareil de climatisation, de telle sorte que des fluides plus lourds que l'air, en particulier des agents frigorigènes sont aptes à être guidés vers l'orifice de fond (10, 11) via les surfaces de guidage, et de là à être évacués vers l'environnement.

8. Appareil de climatisation selon l'une des revendications 1 à 7, **caractérisé en ce que**
- l'évaporateur (5) est un échangeur de chaleur d'intérieur qui est sensiblement agencé dans la zone intérieure (21) ;
- l'évaporateur (5) comprend plusieurs éléments de conduite (14, 16) qui sont reliés les uns aux autres à des points d'assemblage ; et **en ce que**
- les points d'assemblage de l'évaporateur (5) sont agencés dans la zone extérieure (22).

9. Appareil de climatisation selon l'une des revendications 1 à 8, **caractérisé en ce qu'**au moins une partie des éléments de conduite (14, 16) de l'évaporateur est reliée à une plaque de contre-support (15) agencée dans la zone extérieure (22).

10. Appareil de climatisation selon l'une des revendications 1 à 9, **caractérisé en ce que** la partie de l'évaporateur (5) qui est agencée dans la zone intérieure (21) ne présente pas de points d'assemblage.
